# FASCICULE DE BREVET EUROPEEN

(11) **EP 1 346 809 B1**
(45) Date de publication et mention de la délivrance du brevet: **16.11.2005**
(21) Numéro de dépôt: 03290649.7
(22) Date de dépôt: 14.03.2003
(51) Int. Cl.: B29C 45/16, B29C 45/14, B60G 7/00, F16F 1/38

(54) **Procédé de fabrication d'une articulation montée sur un support**
Verfahren zur Herstellung eines mit einem Halter verbundenen Gelenks
Method for producing an articulation mounted on a support

(30) Priorité: 20.03.2002 FR 0203482
(43) Date de publication de la demande: 24.09.2003
(73) Titulaire: C.F. GOMMA S.p.A., 25050 Passirano (Brescia) (IT)
(72) Inventeur: Auge, Jean-Yves, 49123 Ingrandes sur Loire (FR); Mancel, Jean-Yves, 35000 Rennes (FR); Rot, Claude, 35740 Pace (FR)
(74) Mandataire: Breese, Pierre

(56) Documents cités:
- EP-A- 0 327 810
- WO-A-00/53464
- PATENT ABSTRACTS OF JAPAN vol. 1998, no. 10, 31 août 1998 (1998-08-31) & JP 10 113932 A (YAMASHITA GOMME KK), 6 mai 1998 (1998-05-06)
- PATENT ABSTRACTS OF JAPAN vol. 1999, no. 09, 30 juillet 1999 (1999-07-30) & JP 11 108093 A (TOKAI RUBBER IND LTD), 20 avril 1999 (1999-04-20)

## Description

La présente invention concerne une articulation montée sur un support et son procédé de fabrication. Elle s'applique en particulier, mais non exclusivement, aux articulations en caoutchouc, ou élastomère, largement utilisées pour le filtrage et l'amortissement des sollicitations mécaniques dans les véhicules automobiles ; ces articulations étant principalement montées sur des pièces de liaison au sol.

D'une manière générale, ces articulations, montées sur des pièces telles qu'un triangle, une traverse de train ou une biellette, comportent une pluralité d'armatures reliées, et fixées, entre elles par l'intermédiaire d'un élastomère ; les armatures pouvant être en métal ou à base de polymères. Ces articulations assurent notamment une fonction de filtrage des vibrations transmises par les trains, afin de réduire les bruits et d'améliorer le confort, ainsi qu'un amortissement des efforts exceptionnels.

Afin de garantir un bon comportement de l'articulation, une opération mécanique est classiquement réalisée pour rétreindre l'élastomère. Cette opération permet de compenser le retrait de l'élastomère, ou du caoutchouc, pour éviter qu'il ne soit pas en traction, ou simplement pour le comprimer.

Ce type d'articulations est ensuite fixé sur un support par une opération d'emmanchement dans un logement aménagé à cet effet ; la tenue de la pièce étant assurée par un choix judicieux de l'ajustement ou de forme.

L'assemblage de ce type d'articulations sur le support est donc réalisé à posteriori, souvent par le client ou le fournisseur du support.

Ce procédé classique de fabrication et de montage d'articulations selon l'art antérieur présente un certain nombre d'inconvénients.

Tout d'abord, ce procédé a pour conséquence une maîtrise délicate de l'articulation au moment de l'emmanchement. En effet, des ruptures de l'articulation ou une déformation du support sont fréquemment constatées ; lesdites ruptures ou ladite déformation pouvant par ailleurs apparaître tout au long de la durée de production de l'articulation. D'autre part, la tenue au démanchement est insuffisante, en particulier dans le cas où l'armature extérieure est en plastique.

En outre, une opération de reprise est à prévoir pour l'opération de rétreint. Il risque également d'apparaître une dispersion géométrique importante liée à la résultante des dispersions du support et de l'articulation. Enfin, ce procédé nécessite de réaliser un détrompage, ou marquage, spécifique afin d'éviter les erreurs de montage.

Une solution a déjà été proposée afin de ne pas avoir à réaliser ultérieurement l'emmanchement de l'articulation sur le support. Cette solution consiste à surmouler directement l'articulation sur son support, ce qui permet de supprimer l'armature extérieure ; l'opération de rétreint ou de dudgeonnage étant toujours indispensable.

Mais ce procédé présente également un grand nombre d'inconvénients. En effet, ce procédé nécessite des opérations de traitement pour l'adhésion/fixation du surmoulage sur le support, ainsi que le dépôt d'adhésif sur la surface externe du support ; ces opérations de traitement et de dépôt entraînant un coût relativement important et étant parfois difficiles à réaliser. En effet, les formes complexes ou une rigidité insuffisante de certains supports sont sources de difficulté supplémentaires. Or, le bon comportement de l'articulation dépend pour beaucoup de la qualité de réalisation des susdites opérations pour l'adhésion/fixation et pour le dépôt d'adhésif.

Avec ce procédé, les caractéristiques mécaniques obtenues sur l'articulation dépendent donc essentiellement de la géométrie du support de sorte que lorsque cette géométrie est complexe, les susdites opérations de traitement et de dépôt doivent être réalisées de façon particulièrement soignée ce qui représente une perte de temps relativement conséquente. L'opération de rétreint peut, de ce fait, être impossible à réaliser.

Par ailleurs, avec ce procédé, le support doit pouvoir supporter toutes les contraintes de moulage du caoutchouc, c'est-à-dire en particulier la température et la pression élevées.

L'invention a donc plus particulièrement pour but de remédier aux inconvénients des deux procédés de fabrication d'une articulation de l'art antérieur. Elle est définie par un procédé selon la revendication 1. Elle propose à cet effet un procédé de fabrication d'une articulation montée sur un support, notamment dans les véhicules automobiles, comportant une étape de réalisation d'au moins une armature intérieure, une étape de moulage d'un élastomère sur l'armature intérieure et de part et d'autre de l'armature intérieure, une étape de traitement chimique et/ou mécanique de l'armature intérieure pour l'adhésion/fixation dudit élastomère moulé. Le procédé comprend en outre une étape de surmoulage d'au moins une armature extérieure sur le support et l'ensemble armature intérieure/caoutchouc moulé.

Selon une possibilité offerte par l'invention, l'étape de réalisation du sous-ensemble moulé comprenant l'armature intérieure et l'élastomère consistera en une opération classique de moulage.

Selon un autre mode d'exécution du procédé de l'invention, l'étape de réalisation de l'armature extérieure consistera en une opération de surmoulage d'un polymère entre le susdit sous-ensemble et le support.

Avantageusement, le procédé de fabrication d'une articulation montée sur un support comprendra une étape de dépose d'un adhésif sur la surface externe de l'armature intérieure.

Par ailleurs, ce procédé pourra comprendre, préalablement à l'étape de surmoulage de l'armature extérieure, une étape de dépose d'adhésif sur la surface externe de l'élastomère permettant de faciliter la fixation de l'armature surmoulée à l'élastomère.

Le procédé de fabrication d'une articulation montée sur un support selon l'invention permet ainsi de s'affranchir de l'opération de traitement de la surface du support pour l'adhésion de l'articulation, ou l'opération de dépose d'un adhésif sur ce même support. Ce procédé permet également de supprimer l'opération d'assemblage de l'articulation sur le support.

Par ailleurs, l'opération de rétreint de l'élastomère, habituellement réalisée mécaniquement, n'est plus réalisée en tant que telle, mais se trouve être effectuée lors de l'opération de surmoulage plastique de l'armature extérieure.

Avantageusement, la longueur de l'armature intérieure sera supérieure ou égale à celle de l'armature extérieure.

L'invention concerne également une articulation montée sur un support, notamment dans les véhicules automobiles, comportant au moins une armature intérieure et un élastomère moulé sur l'armature intérieure caractérisée en ce qu'elle comprend au moins une armature extérieure surmoulée directement sur le support et l'ensemble armature intérieure/élastomère moulé.

Avantageusement, l'armature intérieure consistera en un polymère, surmoulé sur le support ou moulé classiquement puis fixé sur le support. De la même manière, l'armature extérieure sera un polymère.

De la même manière, les armatures, intérieures et extérieures, présenteront une rigidité supérieure à celle de l'élastomère moulé.
Un procédé de fabrication d'une articulation comportant un ensemble armature intérieure/élastomère avec notamment une étape de moulage d'un élastomère sur le support et de part et d'autre de l'armature intérieure est décrit dans la demande de brevet WO-A-0053464.

Un mode d'exécution de l'invention sera décrit ci-après, à titre d'exemple non limitatif, avec référence aux dessins annexés dans lesquels :
- la figure 1 est un schéma bloc illustrant les différentes opérations réalisées selon l'invention d'une part sur le(s) armature(s) intérieure(s) et le support ;
- la figure 2 est une vue en coupe verticale d'une articulation selon l'invention montée sur un support ;
- la figure 3 représente la région de l'articulation représentée sur la figure 2 où a lieu le surmoulage de l'armature extérieure,

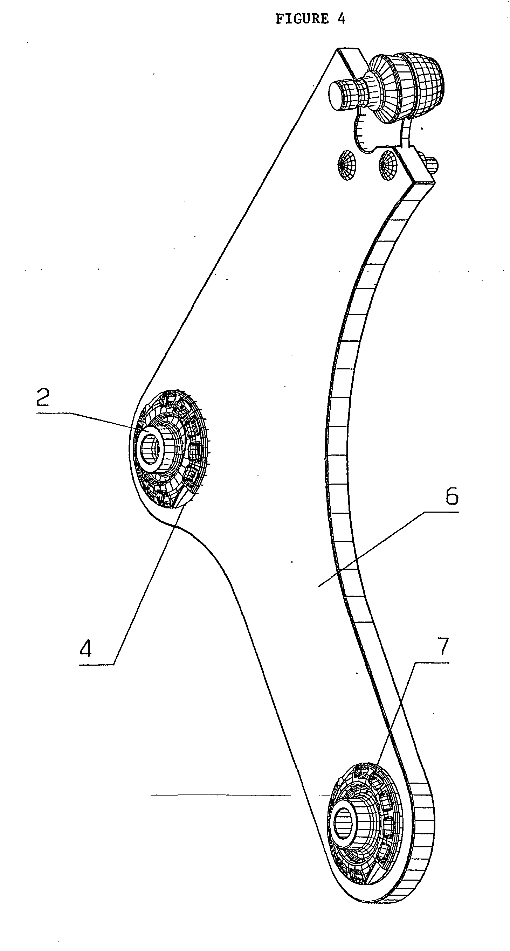

- la figure 4 est une vue en perspective du susdit support.

L'articulation 1 selon l'invention est montée sur un support 6, par exemple de forme cylindrique ou rectangulaire, qui pourra être une pièce classique de liaison au sol, telle qu'une traverse ou une biellette, dans des véhicules. Par ailleurs, l'espace existant entre l'armature intérieure 2 et entre cette dernière 2 et l'armature extérieure 4 est comblé par un élastomère 7 assurant la liaison sensiblement élastique entre les différentes armatures 2 et 4.

Les différents éléments formant l'articulation 1 selon l'invention, c'est-à-dire les armatures intérieure 2 et extérieure 4 ainsi que l'élastomère 7, peuvent être disposés de façon symétrique de part et d'autre de l'axe X'X.

L'armature intérieure 2 peut être réalisée selon deux modes différents : soit l'armature 2, en polymère, est fabriquée classiquement par moulage, et rapportée ultérieurement sur le support 6, soit elle est surmoulée directement sur le support 6.

Dans les deux cas, l'armature intérieure 2 est disposée sur le support 6. Ici, le support étant de forme cylindrique, ledit support 6 entourera l'armature intérieure 2.

Ensuite, il est nécessaire de procéder à une étape de traitement chimique ou mécanique de la surface externe de l'armature intérieure 2 ainsi qu'une étape de dépose d'adhésif sur cette surface de sorte que ladite armature 2 puisse se fixer facilement à l'élastomère 7 choisi pour être moulé entre l'armature intérieure 2 et de part et d'autre de l'armature 2.

De la même manière que pour l'armature intérieure 2, la surface externe de l'élastomère moulé 7 pourra subir une étape de dépose d'adhésif afin d'optimiser la fixation ultérieure dudit élastomère 7 à l'armature extérieure 4. Néanmoins, cette étape de dépose d'adhésif sur la surface externe de l'élastomère reste optionnelle.

Les armatures sont fabriquées de telle sorte qu'elles entourent les deux extrémités de l'élastomère 7 de part et d'autre du plan X'X. Ainsi, l'élastomère 7 est prisonnier dans trois parties indépendantes, séparées par l'armature intérieure 2, soit entre l'armature intérieure 2 pour une part et respectivement entre l'armature intérieure 2 et l'armature extérieure 4 pour les deux autres parties.

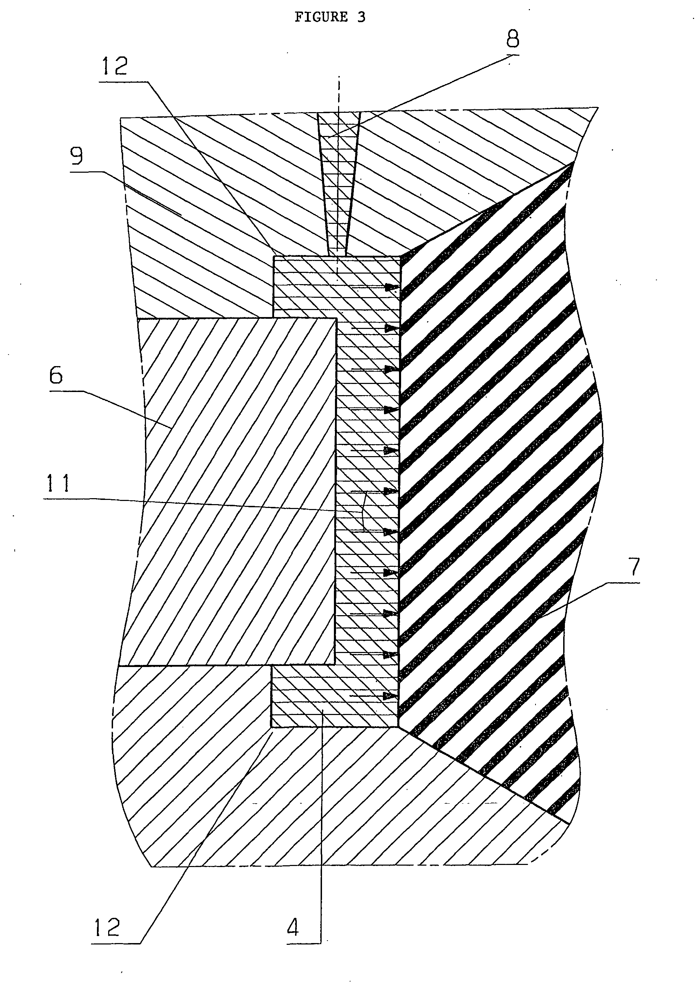

Comme le montre la figure 3, le polymère formant l'armature extérieure 4 est injecté par un orifice 8 défini entre la paroi 9 du moule, le support 6 et l'élastomère 7. Ainsi, l'injection du polymère pour former l'armature extérieure 4 permet d'effectuer l'opération de rétreint en agissant par pression 11 sur l'élastomère 7 contre l'armature intérieure 2.

Bien entendu, les différentes étapes du procédé selon l'invention sont réalisées en un temps d'exécution relativement court de sorte que l'élastomère 7 et le(s) polymère(s) utilisé(s) pour former les armatures, intérieure 2 et extérieure 4, ne peuvent pas se refroidir et prendre une forme définitive avant que toutes les étapes du procédé soient effectuées.

Le procédé selon l'invention autorise à profiter du surmoulage plastique pour identifier l'articulation 1, par exemple par marquage à l'aide d'un poinçon spécial, et assurer ainsi une bonne traçabilité de ladite articulation 1.

Grâce aux particularités du procédé selon l'invention, il est possible d'améliorer de façon conséquente la maîtrise géométrique de la position de l'articulation 1 par rapport au support 6, ce qui permet d'obtenir de faibles dispersions. Par ailleurs, il est possible de réaliser plusieurs surmoulages d'articulations 1 en même temps.

En outre, il est important de noter que ce procédé peut s'appliquer sur n'importe quel type de support 6 dont les dispersions ne sont pas parfaitement maîtrisées. Ainsi, grâce à l'invention, il est rendu possible de réaliser plusieurs articulations 1 sur un support 6 pour lesquelles on demande une grande précision géométrique au niveau leurs entraxes.

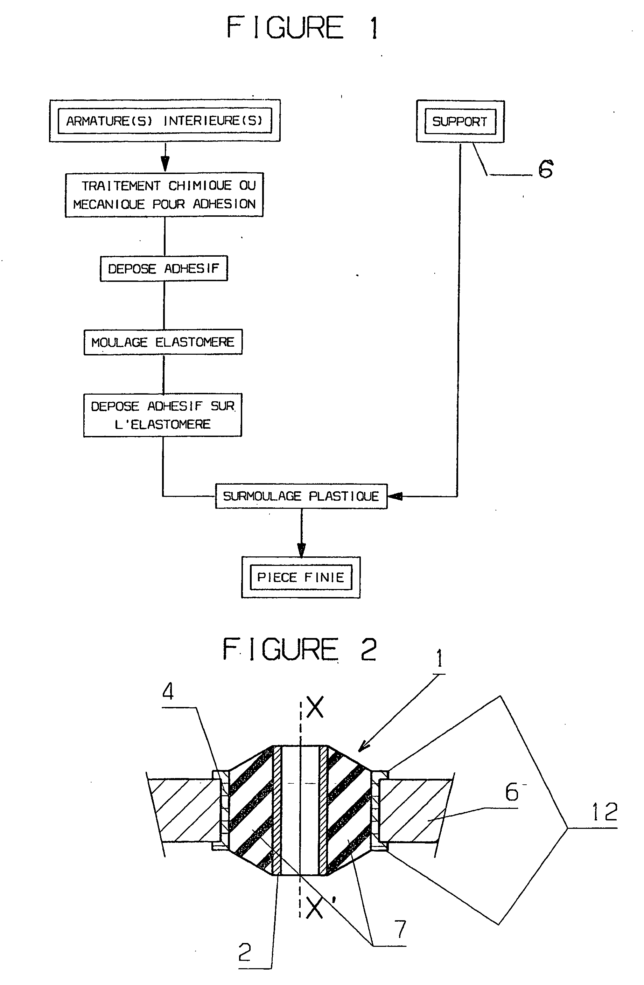

À titre d'exemple, l'invention offre une grande latitude pour apporter les aménagements nécessaires sur l'armature plastique 4 pour garantir une bonne tenue au démanchement de l'articulation 1 vis-à-vis du support 6. On pourra ainsi concevoir de l'armature extérieure 4, de dimensions relativement importantes, formant "clip". Comme cela est visible sur les figures 2 et 3, l'armature extérieure 4 comporte alors deux collerettes de retenue 12 permettant d'améliorer le maintien fixe verticalement de ladite armature 4 sur le support 6.

## Revendications

1. Procédé de fabrication d'une articulation (1) montée sur un support (6) comportant une étape de réalisation d'au moins une armature intérieure (2), une étape de moulage d'un élastomère (7) sur l'armature intérieure (2) **caractérisé en ce qu'**il comprend une étape de traitement chimique et/ou mécanique de l'armature intérieure (2) pour l'adhésion/fixation dudit élastomère moulé (7), et une étape de surmoulage d'au moins une armature extérieure (4) sur le support (6) et l'ensemble armature intérieure/élastomère moulé.

2. Procédé de fabrication d'une articulation montée sur un support selon la revendication 1, **caractérisé en ce que** l'étape de moulage du élastomère (7) sur l'armature intérieure (2) consistera en une opération classique de moulage.

3. Procédé de fabrication d'une articulation montée sur un support selon la revendication 1, **caractérisé en ce que** l'étape de réalisation de l'armature extérieure (4) consistera en une opération de surmoulage d'un polymère entre un sous-ensemble comprenant l'armature intérieure (2) et l'élastomère (7) et le support (6).

4. Procédé de fabrication d'une articulation montée sur un support selon la revendication 1, **caractérisé en ce qu'**il comprend une étape de dépose d'un adhésif sur la surface externe de l'armature intérieure (2).

5. Procédé de fabrication d'une articulation montée sur un support selon la revendication 1, **caractérisé en ce qu'**il comprend, préalablement à l'étape de surmoulage de l'armature extérieure (4), une étape de dépose d'adhésif sur la surface externe de l'élastomère (7) permettant de faciliter la fixation de l'armature surmoulée (4) à l'élastomère (7).

6. Procédé de fabrication d'une articulation montée sur un support selon l'une quelconque des revendications précédentes, **caractérisé en ce que** ledit support (6) est une pièce de véhicule automobile.

7. Procédé de fabrication d'une articulation montée sur un support selon l'une quelconque des revendications précédentes, **caractérisé en ce que** l'armature extérieure (4) est en polymère.

8. Procédé de fabrication d'une articulation montée sur un support selon l'une quelconque des revendications précédentes, **caractérisé en ce que** les armatures, intérieures (2) et extérieure (4), présentent une rigidité supérieure à celle de l'élastomère moulé (7).

9. Procédé de fabrication d'une articulation montée sur un support selon l'une quelconque des revendications précédentes, **caractérisé en ce que** l'armature extérieure (4) comporte deux collerettes de retenues (12) permettant d'améliorer le maintien fixe verticalement de cette armature extérieure (4) sur le support (6).

10. Procédé de fabrication d'une articulation montée sur un support selon l'une quelconque des revendications précédentes, **caractérisé en ce que** la longueur de l'armature intérieure (2) est supérieure ou égale à celle de l'armature extérieure (4).

## Patentansprüche

1. Verfahren zur Herstellung eines Gelenks (1), das auf einen Träger (6) montiert ist, wobei das Verfahren einen Schritt der Realisierung von mindestens eine Innenbewehrung (2), einen Schritt der Formgebung eines Elastomers (7) auf der Innenbewehrung (2) umfasst, **dadurch gekennzeichnet, dass** es einen Schritt der chemischen und/oder mechanischen Behandlung der Innenbewehrung (2) für die Adhäsion/Befestigung des geformten Elastomers (7) umfasst, und einen Schritt des Umspritzen von mindestens einer Außenbewehrung (4) auf den Träger (6) und die Einheit Innenbewehrung/geformtes Elastomer.

2. Verfahren zur Herstellung eines Gelenks, das auf einen Träger montiert ist, nach Anspruch 1, **dadurch gekennzeichnet, dass** der Schritt der Formgebung des Elastomers (7) auf der Innenbewehrung (2) aus einer klassischen Formgebungsoperation besteht.

3. Verfahren zur Herstellung eines Gelenks, das auf einen Träger montiert ist, nach Anspruch 1, **dadurch gekennzeichnet, dass** der Schritt der Realisierung der Außenbewehrung (4) aus einer Operation des Umspritzens eines Polymers zwischen einer Untereinheit, die die Innenbewehrung (2) und das Elastomer (7) umfasst, und dem Träger (6) besteht.

4. Verfahren zur Herstellung eines Gelenks, das auf einen Träger montiert ist, nach Anspruch 1, **dadurch gekennzeichnet, dass** es einen Schritt des Auftragens eines Haftmittels auf der externen Fläche der Innenbewehrung (2) umfasst.

5. Verfahren zur Herstellung eines Gelenks, das auf einen Träger montiert ist, nach Anspruch 1, **dadurch gekennzeichnet, dass** es vor dem Schritt des Umspritzens der Außenbewehrung (4), einen Schritt des Auftragens eines Haftmittels auf der externen Fläche des Elastomers (7) umfasst, was es erlaubt, die Befestigung der umspritzten Bewehrung (4) am Elastomer (7) zu erleichtern.

6. Verfahren zur Herstellung eines Gelenks, das auf einen Träger montiert ist, nach einem der vorhergehenden Ansprüche, **dadurch gekennzeichnet, dass** der Träger (6) ein Teil eines Kraftfahrzeuges ist.

7. Verfahren zur Herstellung eines Gelenks, das auf einen Träger montiert ist, nach einem der vorhergehenden Ansprüche, **dadurch gekennzeichnet, dass** die Außenbewehrung (4) aus Polymer ist.

8. Verfahren zur Herstellung eines Gelenks, das auf einen Träger montiert ist, nach einem der vorhergehenden Ansprüche, **dadurch gekennzeichnet, dass** die Innenbewehrung (2) und die Außenbewehrung (4) eine Festigkeit aufweisen, die größer als die vom geformten Elastomer (7) ist.

9. Verfahren zur Herstellung eines Gelenks, das auf einen Träger montiert ist, nach einem der vorhergehenden Ansprüche, **dadurch gekennzeichnet, dass** die Außenbewehrung (4) zwei Halteflansche (12) umfasst, die es erlauben, die feste Haltung von dieser Außenbewehrung (4) auf dem Träger (6) vertikal zu verbessern.

10. Verfahren zur Herstellung eines Gelenks, das auf einen Träger montiert ist, nach einem der vorhergehenden Ansprüche, **dadurch gekennzeichnet, dass** die Länge von der Innenbewehrung (2) größer oder gleich der Länge von der Außenbewehrung (4) ist.

## Claims

1. Process for making an articulation (1) mounted on a support (6) comprising a step of producing at least one inner frame (2), a step of moulding an elastomer (7) on each side of the inner frame (2), **characterised in that** it comprises a step of chemical and / or mechanical treatment of the inner frame (2) for adhesion /attachment of the said moulded elastomer (7), and a step of insert moulding at least one external frame (4) onto the support (6) and the inner frame / moulded elastomer assembly.

2. Process for making an articulation mounted on a support according to claim 1, **characterised in that** the step of moulding an elastomer (7) onto the inner frame (2) will consist of a conventional moulding operation.

3. Process for making an articulation mounted on a support according to claim 1, **characterised in that** the step of making the external frame (4) will consist of an insert moulding operation of a polymer between a subset comprising the inner frame (2) and the elastomer (7), and the support (6).

4. Process for making an articulation mounted on a support according to claim 1, **characterised in that** it comprises a step of placing an adhesive on the outer surface of the inner frame (2).

5. Process for making an articulation mounted on a support according to claim 1, **characterised in that** it comprises, before the step of insert moulding of the outer frame (4), a step of deposing adhesive on the outer surface of the elastomer (7) to facilitate the attachment of the insert moulded frame (4) onto the elastomer (7).

6. Process for making an articulation mounted on a support according to any one of the previous claims, **characterised in that** the said support (6) is an automobile vehicle part.

7. Process for making an articulation mounted on a support according to any one of the previous claims, **characterised in that** the outer frame (4) is made of polymer.

8. Process for making an articulation mounted on a support according to any one of the previous claims, **characterised in that** the inner frame (2) and the outer frame (4) are stiffer than the moulded elastomer (7).

9. Process for making an articulation mounted on a support according to any one of the previous claims, **characterised in that** the outer frame (4) comprises two retaining collars (12) to improve the fixed vertical resistance of this outer frame (4) on the support (6).

10. Process for making an articulation mounted on a support according to any one of the previous claims, **characterised in that** the length of the inner frame (2) is greater than the length of the outer frame (4).
